# EUROPÄISCHE PATENTSCHRIFT

(11) **EP 0 995 286 B1**
(45) Veröffentlichungstag und Bekanntmachung des Hinweises auf die Patenterteilung: **30.07.2008**
(21) Anmeldenummer: 98925569.0
(22) Anmeldetag: 11.05.1998
(51) Int. Cl.: H04J 14/02, H04J 3/12, H04B 10/08

(54) **VERFAHREN ZUR ÜBERTRAGUNG VON SIGNALISIERUNGS UND STEUERINFORMATIONEN FÜR WELLENLÄNGENMULTIPLEX-NETZE ZUR OPTISCHEN FASERGEBUNDENEN INFORMATIONSUBER**
METHOD FOR TRANSMITTING OVERHEAD INFORMATION FOR WAVELENGTH DIVISION MULTIPLEX NETWORKS FOR FIBRE-OPTIC INFORMATION TRANSMISSION
PROCEDURE DE TRANSMISSION D'INFORMATIONS DE SIGNALISATION ET DE COMMANDE POUR RESEAUX A MULTIPLEXAGE EN LONGUEUR D'ONDE DESTINES A LA TRANSMISSION D'INFORMATIONS OPTIQUE PAR FIBRES

(30) Priorität: 15.07.1997 DE 19730294
(43) Veröffentlichungstag der Anmeldung: 26.04.2000
(73) Patentinhaber: Deutsche Telekom AG, 53113 Bonn (DE)
(72) Erfinder: ZEFFLER, Klaus-Peter, D-64296 Darmstadt (DE); DASSOW, Heiko, D-64347 Griesheim (DE)
(86) Internationale Anmeldenummer: PCT/EP1998/002737
(87) Internationale Veröffentlichungsnummer: WO 1999/004526

(56) Entgegenhaltungen:
- EP-A- 0 414 333
- EP-A- 0 547 527
- EP-A- 0 573 752
- CHAN C -K ET AL: "A PRACTICAL PASSIVE SURVEILLANCE SCHEME FOR OPTICALLY AMPLIFIED PASSIVE BRANCHED OPTICAL NETWORKS" IEEE PHOTONICS TECHNOLOGY LETTERS, Bd. 9, Nr. 4, April 1997, Seiten 526-528, XP000690482

## Beschreibung

Die Erfindung betrifft ein Verfahren zur Übertragung von Signalisierungs-und Steuerinformationen für Wellenlängenmultiplex-(WDM-)Netze zur optischen, fasergebundenen Informationsübertragung in digitalisierter Form gemäß dem Oberbegriff von Anspruch 1.

Aus der Übertragungstechnik sind verschiedene Verfahren bekannt, wie mehrere unabhängige Signale für den Transport von Daten, Sprache, Text oder Bilder über ein gemeinsames Medium übertragen werden können. Dieses kann realisiert werden, indem sich die der Nutzinformation zugrunde liegenden Signale auf Grund ihrer Zeitlage, Frequenzlage oder ihrer Kodierung unterscheiden. Häufig ist es dabei nötig, zusätzlich zur Nutzinformation auch sogenannte Signalisierungs- und Steuerinformation (Overheadinformation) mit zu übertragen. Diese Overheadinformation kann zum Steuern der beteiligten Netzelemente, zur Identifizierung der übertragenen Signale oder zur Feststellung der Übertragungsqualität dienen. Bei den herkömmlichen digitalen Übertragungsverfahren, wie beispielsweise den Zeitmultiplexverfahren PDH und SDH, kann sehr leicht Overheadinformation zusätzlich zur Nutzinformation durch die Verwendung entsprechend reservierter Zeitschlitze übertragen werden. Durch die elektronische Digitaltechnik ist eine sehr kostengünstige Realisierung solcher Verfahren möglich.

In der optischen Übertragungstechnik ist bekannt, mehrere Signale über ein gemeinsames Medium, die Glasfaser, zu übertragen, indem vor der optischen Modulierung mehrere Signale mit den Mitteln der konventionellen Übertragungstechnik gemultiplext werden. Nachteil dieses Verfahrens ist, daß auf die einzelnen Signale oder auf die enthaltene Overheadinformation nicht mit den Methoden der Optik zugegriffen werden kann. Erst nach der Rückwandlung in ein elektrischen Signal läßt sich die Overheadinformation lesen und die einzelnen Teilsignale unabhängig voneinander weiterleiten.

Wesentlich universeller ist hier der in ersten Referenzstrecken erprobte Einsatz eines optisches Frequenz- bzw. Wellenlängenmultiplex-Verfahrens.

Hierbei werden die Nutzinformationen mit Hilfe von Lasern unterschiedlicher Sendefrequenz moduliert. Dadurch ist es mit einfachen passiven optischen Filter möglich, die über eine Glasfaser übertragene Signale entsprechend ihrer Frequenz zu selektieren. Mit Hilfe eines solchen mit Wavelength Division Multiplex (WDM, Wellenlängenmultiplex) bezeichneten Netz ist es möglich, die einzelnen Signale transparent bezüglich ihrer Kodierung zu übertragen. Daher können gleichzeitig viele in unterschiedlichen Endeinrichtungen (TE) bzw. Engeräten verschieden kodierte Signale über eine Übertragungsstrecke transportiert werden, solange sie sich aufgrund der verwendeten Wellenlänge unterscheiden.

Noch nicht befriedigend gelöst ist für die WDM-Netze die Realisierung des Overheadkanals zur Übertragung von Signalisierungs- und Steuerinformation. Bei der optischen Übertragung von WDM-Signalen ist es nach gegenwärtigem Stand der Technik nicht möglich, die Overheadinformation, wie beispielsweise bei der PCM- oder SDH-Technik, zusammen mit der Nutzinformation zu übertragen. Dieses scheitert daran, daß - im Gegensatz zu der festgelegten Rahmenstruktur dieser elektronischer Übertragungssysteme - beliebige Kodierverfahren im WDM-Netz für das Nutzsignal zulässig sind. Ein anderer Aspekt ist aber auch das Fehlen leistungsfähiger digitaler Bauelemente zur optischen Signalverarbeitung. Daher wird zur Zeit überlegt, einen eigenen Overheadkanal mit eigener Trägerfrequenz durch das WDM-Netz zu schalten. Problematisch ist bei dieser Lösung, daß die Overheadinformation unabhängig von der Nutzinformation übertragen wird. Hierdurch können frequenzselektive Störungen ebensowenig erkannt werden, wie die falsche Weiterleitung eines Nutzsignals. Außerdem ergibt sich an passiven optischen Koppelelementen das Problem der möglichen Überlagerung zweier Overheadsignale. Der technischen Aufwand zur Lösung dieses Problems steht dabei in keinen Verhältnis zu den geringen Kosten solcher Elemente.

Die Erfindung bezieht sich auf Netze zur optischen, fasergebundenen Übertragung von digitalisierten Information. Charakteristisch für das mit Wellenlängenmultiplex (WDM) bezeichnete Netz ist die Tatsache, daß Nutzinformationen in Form von Signalen unabhängig voneinander durch die Verwendung unterschiedlicher optischer Wellenlängen über eine Faser übertragen werden können. Das unterschiedliche Weiterleiten der Nutzinformation in Netzelementen kann dabei mit rein optischen Methoden erfolgen, die auf den unterschiedlichen Wellenlängen der Signale beruhen.

Zur technischen Realisierung eines Übertragungsnetzes ist es notwendig, neben der Nutzinformation auch die als "Overhead" bezeichnete Signalisierungs- und Steuerinformation über das Medium zu übertragen. Für ein optisches WDM-Netz sind hierfür mehrere Lösungsansätze bekannt, die im folgenden kurz erläutert werden:

Aus *Chawki, M.J., Tholey, V Le Gac I: Management protocol of a reconfigurable WDM ring network using SDH overhead bytes; OFC 96 Technical Digest FD3* ist bekannt, für die Kodierung der Nutzinformation zusätzliche Übertragungskapazität für die Signalisierungs- und Steuerinformation zu reservieren. Das optische WDM-Netz kann auf diese reservierte Bandbreite zugreifen, indem das Nutzsignal dekodiert wird und die Signalisierungs- und Steuerinformation hinzugefügt oder ausgelesen wird. Dieses Verfahren erfordert jedoch einen erheblichen technischen Aufwand. Jedesmal wenn auf die Overheadinformation zugegriffen werden soll, muß eine Umwandlung zwischen der optischen und elektrischen Kodierung des kompletten Nutzsignals erfolgen. Für den Fall, das verschiedenartige Endgeräte (TE) mit unterschiedlichen Kodierungsvarianten das optische WDM-Netz benutzen, sind entsprechend viele unterschiedliche Techniken für den Zugriff auf die Overheadinformation parallel zu realisieren.

In der *Draft Recomendation ITU-T G.MCS Geneva June, 1996* wird vorgeschlagen, die Signalisierungs- und Steuerinformation in einem eigenen Steuerkanal über dasselbe oder ein anderes Medium zu übertragen. In S. Johanssort: Transport Network Involving a Reconfigurable WDM Layer, Journal of Lightwave Technology 14 (1996)6, pp. 1341-1349 wird vorgeschlagen, die Signalisierungs- und Steuerinformation mit Hilfe von sogenannten Pilottönen in einen nicht genutzten Frequenzbereiches der Faser zu übertragen. Mit diesen beiden Verfahren sind jedoch einige wünschenswerte Funktionalitäten nicht zu realisieren. So sind keine Rückschlüsse aus der Übertragungsqualität der Overheadinformation auf die Übertragungsqualität für den Nutzkanal möglich. Außerdem lassen sich nicht alle Konfigurationsfehler, wie beispielsweise hanalvertauschungen, durch die getrennte Übermittlung der Steuer- und Signalisierungsinformation erkennen.

Der Erfindung liegt daher die Aufgabe zugrunde, ein Verfahren zur Übertragung von Signalisierungs- und Steuerinformation zur Verfügung zu stellen, das es - ohne strukturelle Veränderungen am optischen Netz vorzunehmen - ermöglicht, Signalisierungs- und Steuerinformationen aufwandsarm und transparent so zu übertragen, daß sie in beliebigen Kodierverfahren kodierbar und von den betreffenden Netzzugangspunkten und Netzelementen einzeln auswertbar sind sowie Rückschlüsse auf die Übertragungsqualität des Nutzkanals erlauben. Der technische Aufwand passiver optischer Netzelemente bezüglich der Weiterleitung der Signalisierungs- und Steuerinformation soll dazu reduziert werden.

Die Lösung der Aufgabe besteht erfindungsgemäß bei einem Verfahren zur Übertragung von Signalisierungs- und Steuerinformationen für Wellenlängenmultiplex-Netze (WDM-Netze) zur optischen, fasergebundenen Informationsübertragung in digitalisierter Form, wobei Nutzinformation mit einem Endgerät optisch kodiert bzw. dekodiert und als optisches Signal definierter Grundwellenlänge an einem Netzzugangspunkt (Network Terminator) in das optische Netz eingespeist bzw. diesem entnommen wird und mehrere Signale unterschiedlicher Wellenlängen gemeinsam in einer Glasfaser übertragen werden, und wobei die Signalisierungs- und Steuerinformation im Netzzugangspunkt oder in einem weiteren Netzelement erzeugt bzw. analysiert und in das Netz eingespeist bzw. diesem entnommen wird, darin, daß unter Anwendung eines Zeitmultiplexverfahrens die Signalisierungs- und Steuerinformationen mit der gleichen Grundwellenlänge über die gleichen Netzkomponenten wie das entsprechende Nutzinformationssignal übertragen wird, wobei die Signalisierungs- und Steuerinformation unabhängig von der Nutzinformation modulierbar ist.

Das erfindungsgemäße Verfahren zeichnet sich also dadurch aus, daß Steuer-und Signalisierungsinformation im gleichen optischen WDM-Kanal wie das Nutzsignal übertragen wird. Damit können im Gegensatz zur Übertragung der Overheadinformation in einem gesonderten Kanal, z.B. mit einer anderen Wellenlänge, Konfigurationsfehler des optischen Netzes erkannt werden, da das Steuersignal den gleichen optischen Weg über die gleichen Netzkomponenten wie das Nutzsignal nimmt. Wesentlicher Bestandteil dieses Multiplexverfahrens ist weiterhin die Tatsache, daß unterschiedliche Modulations-/Kodierverfahren für das Nutzsignal und die Overheadinformation verwendet werden können.

Anstelle des Nutzsignales wird zu bestimmten Zeitpunkten die Overheadinformation über das Medium übertragen. Durch eine charakteristische Signalfolge kann der Overheadkanal zeitlich im Signalstrom des Nutzsignal erkannt werden. Durch die periodische Wiederholung des Overheadkanals können - nach erfolgter Synchronisierung - Fehlinterpretationen von Nutzsignalen als charakteristische Signalfolge ausgeschlossen werden. Damit ist das beanspruchte Verfahren an die Erfordernisse eines optischen Kanals bezüglich der Transparenz für Nutzsignale verschiedener Endgeräte des WDM-Netzes angepaßt.

Der wesentliche mit der Erfindung erzielbare Vorteil besteht darin, daß die Overheadinformation in einem optischen WDM-Netz nicht frequenztechnisch getrennt zu dem Nutzsignal weitergeleitet werden muß. Für aktive oder passive Elemente, die nicht auf die im Overhead enthaltenen Informationen zugreifen müssen, ist keinerlei zusätzlicher technischer Aufwand zur Weiterleitung der Overheadinformation notwendig. Dadurch, daß für den Kanal der Steuer- und Signalisierungsinformation die gleichen übertragungstechnischen Eigenschaften des Mediums wie für das Nutzsignal gelten, können aufgrund der Bitfehlerrate in der Overheadinformation direkte Rückschlüsse auf die Übertragungsqualität des Kanals für das Nutzsignals gezogen werden. Trotzdem existieren bei diesen Verfahren keine wesentlichen Restriktionen bezüglich der Art der Kodierung des Nutzsignals, die durch das Endgerät (TE) für das WDM-Netz durchgeführt wird.

Durch die Möglichkeit, Steuer- und Signalisierungsinformation in einem anderen technischen Verfahren zu kodieren als die Nutzinformation, kann der Zugriff auf die Steuer- und Signalisierungsinformation mit einfachen technischen Mitteln erfolgen. Es ist daher nicht notwendig, die Steuer- und Signalisierungsinformation mit den gleichen hohen technischen Aufwand zu kodieren und zu dekodieren, wie es für die Nutzinformation aufgrund von funktionalen Anforderungen notwendig sein könnte.

Die Signalisierungs- und Steuerinformation wird vorzugsweise in regelmäßigen zeitlichen Abständen T für eine Dauer von Tₛ übertragen. Vorteilhaft ist dabei, wenn T ein Vielfaches der charakteristischen Taktdauer der Nutzinformation ist. Dies bedeutet, daß zur Synchronsierung des Zeitmultiplexverfahrens für den Overheadkanal der Sendetakt des Nutzsignals genutzt wird, indem innerhalb des WDM-Netzes zur Synchronisierung des Overheadkanals die Taktinformation aus dem Nutzsignal verwendet wird. Dazu findet eine dynamische Anpassung des Zeitmultiplexverfahrens an den beliebigen Sendetakt des Nutzsignal statt. Die Synchronisierung auf das Nutzsignal kann dabei in einer Lernphase stattfinden, in der in sehr kurzen Zeitabständen ein charakteristisches Signal übertragen wird. In ein oder mehreren Schritten wird nach erfolgter Synchronisierung der zeitliche Abstand des charakterischten Signals stufenweise erhöht.

Um die Beeinflussung des Nutzkanals durch die kurzzeitige Nutzung zur Übermittlung der Overheadinformation möglichst gering zu halten, ist der zeitliche Abstand zwischen den einzelnen Zeitschlitzen für die Overheadinformation möglichst groß zu wählen. Zur Beibehaltung der Synchronität zwischen Sender und Empfänger muß die Taktabweichung während der Übertragungspausen des Overheadkanals möglichst gering gehalten werden. Die technische Realisierung wird dabei deutlich vereinfacht, wenn die Taktinformation des Nutzsignal zur Synchronisierung der bei Sender und Empfänger der Overheadinformation gelegenen Oszillatoren genutzt wird. Dieses ist möglich, da sich bei den heute verwendeten optischen Trägermodulationen der Sendetakt des Nutzsignals innerhalb eines klar zu bestimmenden Freuquenzbereiches befindet. Daher ist eine Anpassung des Overheadsignals an das Timing des Nutzsignals mit minimalen technischen Schaltungsaufwand möglich.

Das erfindungsgemäße Verfahren enthält weiterhin zwei alternative Möglichkeiten, wie trotz der zeitweisen Ausblendung des Nutzsignals zur Übertragung des Overheadinformation Störungen bei der Nutzdatenübertragung vermieden werden können.

Die Overheadinformation wird zu den entsprechenden Zeitpunkten anstelle des Nutzsignals übertragen, wobei das Nutzsignal entweder überschrieben oder ausgeblendet wird. Die sendende Endeinrichtung, die das Nutzsignal kodiert, hat keine Kenntnisse über die Zeitpunkte, in der das eigene Signal nicht übertragen wird. Dieses wirkt sich aus Sicht der empfangenden Endeinrichtung wie die Überlagerung eines Störsignals aus. Durch die Verwendung eines auf diese scheinbare Störung optimierten fehlertoleranten Leitungskodes ist die empfangende Endeinrichtung in der Lage, das ursprüngliche Nutzsignal trotz dieser Störung durch den Overheadkanal zu rekonstruieren.

Durch den Einsatz von Fehlerkorrekturverfahren, wie sie beispielsweise zur Übertragung von Daten über langen Glasfaser-Überseekabel eingesetzt werden, können auch die durch den Zeitschlitz des Overheadkanals verursachten Fehler korrigiert werden. Um die Funktionsfähigkeit dieses Verfahrens gewährleisten zu können, muß die zeitliche Verteilung der Overheadinformation so vorgenommen werden, daß eine spezifizierte mittlere Störrate des Nutzkanals nicht überschritten wird. Zusätzlich sollte ein Fehlerkorrektur-Algorithmus verwendet werden, der für diese Art der durch das Overheadsignal verursachten Blockstörung optimiert ist.

Als Alternative ist vorgesehen, Bandbreite für den Overheadkanal durch die Spezifikation von zeitlichen Lücken im Sendesignal zu reservieren. Die Overheadinformation wird anstelle des Nutzsignals übertragen. In einem dynamischen Verfahren einigen sich die sendendes Endgerät und der nachgeschaltete Netzzugangspunkt über den Zeitpunkt, zu dem die Overheadinformation übertragen werden darf. Dieses kann geschehen, indem das Endgerät die erforderlichen Zeitschlitze freiläßt und deren zeitliche Lage dem Netzzugangspunkt signalisiert. Eine andere Möglichkeit ist, daß der Netzzugangspunkt dem Endgerät signalisiert, wann das Overheadsignal eingefügt wird, damit die zu sendenden Daten kurzzeitig zwischengespeichert werden können, während der optische Kanal zur Übertragung der Overheadinformation genutzt wird.

Diese Ausgestaltung des erfindungsgemäßen Verfahrens vermeidet die Störung des Nutzsignals, indem die Nutzinformation während der durch das Senden des Overheadsignals bedingten Übertragungspause kurzzeitig im Sender zwischengespeichert wird. Hierfür bietet sich der Einsatz von Schieberegistern an, wie sie beispielsweise auch zur Synchronisierung der Eingangssignale bei einem digitalen Koppelfeld in der Vermittlungstechnik verwendet werden.

Eine weitere Vereinfachung der technischen Realisierung ist gegeben, wenn die Übertragung der Overheadinformation durch die Endgeräte anstelle der Netzzugangspunkte vorgenommen wird. Die Overheadinformation wird dabei nicht vom Netzzugangspunkt in das Nutzsignal des Endgeräts eingefügt, sondern das Endgerät übernimmt selbst diese Aufgabe. Hierzu wird von dem beim Sender gelegenen Netzzugangspunkt die Overheadinformation dem sendenden Endgerät zum Zwecke der optischen Modulierung übermittelt. Das empfangende Endgerät selektiert die Overheadinformation aus dem Nutzsignal heraus und überträgt diese an den vorgeschalteten Netzzugangspunkt.

Diese Version des erfindungsgemäßen Verfahrens vermeidet vorteilhaft, daß zusätzlich zu den ohnehin vorhandenen Laser im Endgerät noch ein weiterer Laser zur Modulierung und Übertragung der Overheadinformation im Netzzugangspunkt vorhanden sein muß. Entsprechend braucht die Dekodierung der Overheadinformation nicht durch einen zusätzlichen Detektor am gegenüberliegenden Netzzugangspunkt erfolgen, sondern kann durch das dahinter liegende Endgerät vorgenommen werden. Außerdem besteht die Möglichkeit, wenn im optischen WDM-Netz nicht unmittelbar auf die Overheadinformation zugegriffen werden muß, die Wahl der Kodierung der Overheadinformation dem Endgerät zu überlassen.

Kurzbeschreibung der Zeichnung, in der zeigen:
- Figur 1: die wesentlichen funktionalen Elemente eines optischen WDM-Netzes
- Figur 2: den prinzipiellen zeitlichen Ablauf bei Signalübertragung nach dem erfindungsgemäßen Verfahren
- Figur 3: ein Beispiel für den Zeitverlauf des gesendeten und empfangenen Nutzsignals sowie der Kodierung im WDM-Netz
- Figur 4: ein weiteres Beispiel für den Zeitverlauf des Nutzsignals vor der Kodierung sowie des Nutz- und des Overheadsignals bei der Übertragung über das WDM-Netz

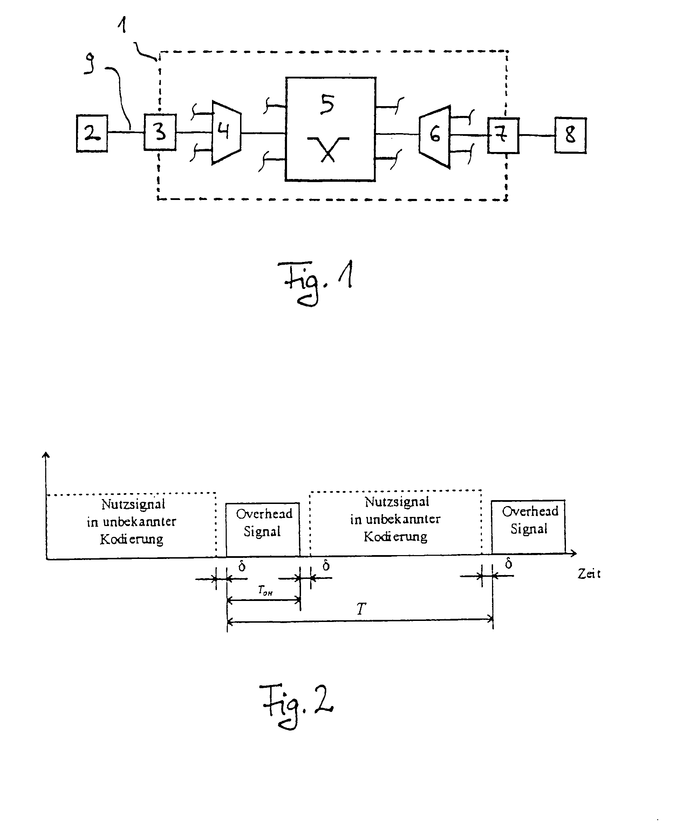

Figur 1 zeigt die wesentlichen funktionalen Elemente eines optischen Wellenlängenmultiplex- (WDM-) Netzes 1. Das Endgerät 2 sendet und empfängt mit einer bestimmten Wellenlänge Nutzinformationen über eine Glasfaser 9. wobei im folgenden nur die Informationsrichtung, in der das Endgerät 2 als Sender fungiert, beschrieben wird. Im Endgerät 2 wird das Nutzsignal, das z.B. als elektrisches Signal vorliegen kann, optisch kodiert. Im Netzzugangspunkt 3 findet eine Überwachung und gegebenenfalls ein Anpassung des optischen Signals an die Erfordernisse des WDM-Netzes statt. Der optische Multiplexer 4 ermöglicht die Übertragung mehrerer Signale aufgrund ihrer unterschiedlichen Wellenlänge über die gleiche Faser. Der optische Cross Connect (OXC) 5 ermöglicht eine flexible räumliche Weiterleitung der Signale entsprechend ihrer optischen Wellenlänge. Der dem OXC nachgeschaltete optische Multiplexer 6 verteilt die mit unterschiedlichen Wellenlängen kodierten Signale auf verschiedene abgehende Glasfasern. Der empfangsseitige Netzzugangspunkt 7 erfüllt eine zum sendeseitigen Netzzugangspunkt 3 analoge Funktion und übermittelt die Signale an das empfangsseitige Endgerät 8. Dieses Endgerät 8 dekodiert das optische Signal und wandelt es in ein elektrisches Signal um, das weiterverwertet werden kann.

Bei Anwendung des erfindungsgemäßen Verfahrens sendet der Netzzugangspunkt 3 Signalisierungs- und Steuerinformation (Overheadinformation) über denselben optischen Kanal, d.h. mit derselben Wellenlänge, wie das vorgeschaltete Endgerät 2 zur Steuerung und Überwachung der durch das Endgerät 2 eingeleiteten Nutzsignalübertragung. Die zu sendende Overheadinformation wird dabei dem Netzzugangspunkt 3 entweder extern beispielsweise als elektrisches Signal zugeführt oder direkt aufgrund des internen Zustands des Geräts lokal erzeugt. Zur Kodierung der Overheadinformation in ein optisches Signal weist der Netzzugangspunkt 3 wie das Endgerät 2 einen Laser auf. Das verwendete Modulationsverfahren unterliegt keinen Einschränkungen, ist insbesondere unabhängig vom Verfahren zur Kodierung des Nutzsignals im Endgerät 2. Es kann daher ein technisch weniger aufwendiges Kodierverfahren als bei der Nutzsignalübertragung gewählt werden. Bei der Übertragung der Overheadinformation über denselben optischen Kanal wie die Nutzinformation findet ein Zeitmultiplexverfahren Anwendung: Das sendende Endgerät 2 läßt entweder Zeitschlitze im Nutzsignal frei und signalisiert deren Lage dem Netzzugangspunkt 3, so daß dieser die Overheadinformation in die zeitlichen Lücken einfügen kann. Alternativ kann der Netzzugangspunkt 3 die Nutzinformation mit Overheadinformation überschreiben.

Empfangsseitig wird die Overheadinformation am Netzzugangspunkt 7 dekodiert und ausgewertet. Der Netzzugangspunkt 7 erkennt dabei im Datenstrom des Nutzsignals für die Overheadinformation typische Signalsequenzen, wodurch sende- und empfangsseitiger Netzzugangspunkt 3 bzw. 7 synchronisiert werden. Nach erfolgter Synchronisierung wertet der empfangsseitige Netzzugangspunkt 7 das optische Signal, bestehend aus Overhead- und Nutzinformation, in regelmäßigen zeitlichen Abständen aus, wodurch er die Overheadinformation als solche erkennt und weiterzuverarbeiten imstande ist, z.B. werden nach Rückwandlung in ein elektrisches Signal die Steuersignale umgesetzt und die Übertragungsqualität überprüft. Das gesamte optische Signal, bestehend aus Overhead- und Nutzinformation, wird vom Netzzugangspunkt 7 dem empfangsseitigen Endgerät übermittelt, welches nun die Nutzinformation rückwandelt und auswertet. Die durch die Übertragung der Overheadinformation bedingte Störung im Nutzsignal wird vorzugsweise durch geeignete Fehlerkorrekturalgorithmen eliminiert bzw. durch Verwendung eines an diese Art von Störung angepaßten Leitungscodes zur Modulierung der Nutzinformation minimiert.

Figur 2 illustriert den prinzipiellen zeitlichen Ablauf bei Signalübertragung nach dem erfindungsgemäßen Verfahren. In regelmäßigen zeitlichen Abständen T wird die Übertragung des Nutzsignals für die Dauer T_{OH} + 2δ unterbrochen und die Steuer- und Signalisierungsinformation für eine zeitliche Dauer von T_{OH} übertragen. Die Variable δ kennzeichnet dabei das zeitliche Intervall, das zwischen der erfolgten Ausblendung des Nutzsignals und der Übertragung der Overheadinformation liegt. Um die Effizienz des Verfahren zu steigern, müssen die Werte für δ und T_{OH} möglichst klein und für T möglichst groß gewählt werden, so daß die Störung des Nutzsignals minimiert ist.

Die Kodierungen des Nutzsignals und des Overheadsignals sind unabhängig voneinander. Der die Overheadinformation kodierende Netzzugangspunkt braucht demnach keine Kenntnis vom Modulierverfahren des vorgeschalteten Endgeräts zu haben und kann ein beliebiges, möglichst ein technisch aufwandsarmes Verfahren zur optischen Kodierung des Overheadsignals verwenden. Lediglich die korrespondierenden Netzzugangspunkte bzw. Endgeräte müssen jeweils das gleiche Kodierverfahren verwenden.

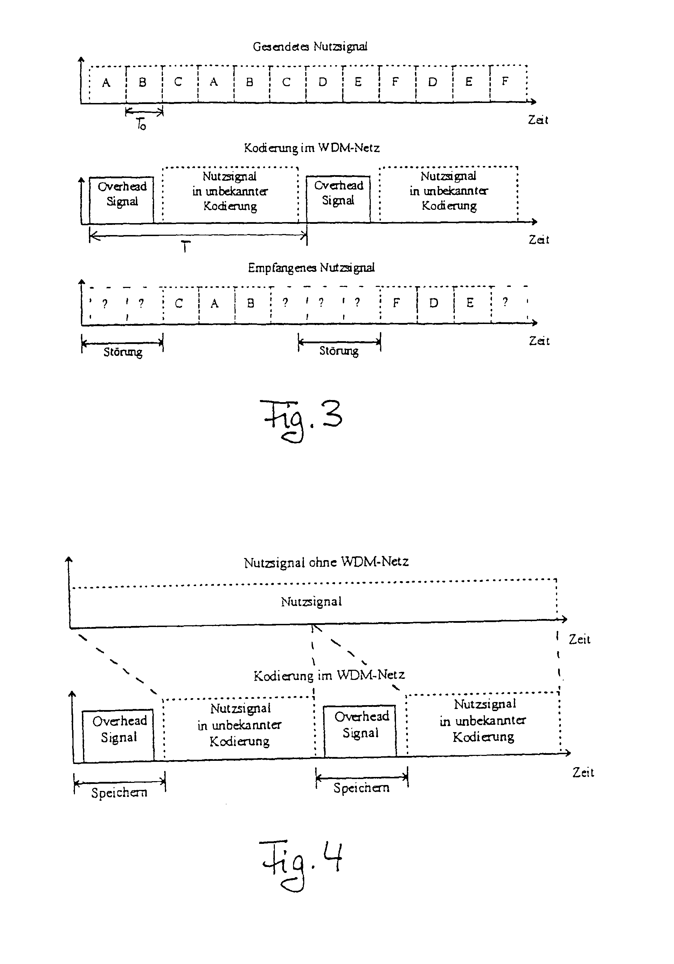

Figur 3 zeigt ein Beispiel für den Zeitverlauf des gesendeten und empfangenen Nutzsignals (oberer bzw. unterer Zeitstrahl) sowie der Kodierung im WDM-Netz (mittlerer Zeitstrahl). Die durch die Buchstaben "A" bis "F" symbolisch dargestellte Nutzinformation wird zeitlich redundant über das Medium, z.B. ein optisches Netz wie in Figur 1 dagestellt, übertragen. Der obere Zeitstrahl zeigt dabei schematisch das vom Endgerät gesendete Nutzsignal vor dem Einspeisen in das optische Netz am Neutzzugangspunkt. Das erfindungsgemäßen Verfahrens sieht vor, daß anstelle der Nutzinformation in regelmäßigen zeitlichen Abständen für eine gewisses zeitliches Intervall Overheadinformation mit derselben Wellenlänge wie das Nutzsignal übertragen wird, wobei die Overheadinformation am Netzzugangspunkt in den Signalstrom eingefügt wird. Die in beliebiger Kodierung vorliegende Nutzinformation wird dazu ausgeblendet und die Overheadinformation in davon unabhängiger Kodierung eingefügt. Nutz- und Overheadinformation wird gemeinsam über denselben optischen Kanal mit dem WDM-Netz übertragen. Der untere Zeitstrahl zeigt das emfangsseitig am Endgerät vorliegende Nutzsignal. Durch das Einfügen der Overheadinformation ist die Nutzinformation zwar unvollständig empfangen worden, jedoch sind die durch "?" gekennzeichneten Übertragungslücken nicht so groß, das eine Rekonstruktion der ursprünglichen Nachricht nicht mehr möglich ist.

Das Nutzsignal wird bei dieser schematischen Darstellung der Problematik mit einer bestimmten Taktfrequenz in Informationsblöcken einer zeitlichen Dauer T₀, hier gekennzeichnet durch die Segmente "A, B, C...", gesendet. Durch die Übertragung der Overheadinformation wird immer ein ganzer Signalblock gestört und kann vom Endgerät nicht empfangen werden. Daher kann es sinnvoll sein, wenn die Übertragung der Overheadinformation zeitlich auf die Übertragung der Nutzinformation abgestimmt ist, insbesondere immer dann beginnt, wenn gerade ein ganzer Nutzinformationsblock gesendet wurde. Zur Rekonstruktion der Nutzinformation finden auf derartige Blockstörungen optimierte Fehlerkorrekturalgorithmen Anwendung.

Figur 4 zeigt ein weiteres Beispiel für den Zeitverlauf des Nutzsignals vor der Kodierung sowie des Nutz- und des Overheadsignals bei der Übertragung über das WDM-Netz. Das Nutzsignal vor der Kodierung, z.B. am Eingang des sendenden Empfangsgeräts, ist im oberen Zeitstrahl dargestellt. Es wird dem sendenden Endgerät mit einer konstanten Bitrate pro Zeiteinheit zugeführt; mit dieser über die Zeit gemittelten Bitrate muß es demnach auch am emfangsseitigen Endgerät ankommen, wenn keine Nutzinformation verloren gehen soll. Eine Version des erfindungsgemäßen Verfahren sieht daher vor, das Nutzsignal, das mit einer konstanten Bitrate über die Zeit gesendet werden muß, während der Übertragung der Overheadinformation kurzzeitig zwischenzuspeichern, z.B. in Schieberegistern, um es dann in der dazwischenliegenden Zeit mit einer entsprechend größeren Bitrate zu übertragen. Dazu einigen sich sendendes Endgerät und der entsprechende Netzzugangspunkt über den Zeitpunkt, zu dem das Overheadsignal anstelle des Nutzsignals übertragen werden soll. Für die Zeit der Übertragung speichert das sendende Endgerät das Nutzsignal und leitet nach Beendigung der Overheadinformation die erneute Übertragung der Nutzinformation mit gegenüber dem am sendenden Endgerät eingehenden Informationsfluß erhöhter ein Bitrate ein.

### Gewerbliche Anwendbarkeit und Nützlichkeit:

Die Erfindung wird vorteilhaft im Bereich der Telekommunikation eingesetzt.

Das Verfahren ermöglicht unter Verwendung der bekannten Netzkomponenten die transparente Übertragung von Signalisierungs- und Steuerinformation über denselben optischen Kanal wie die Nutzinformation, wodurch insbesondere die Kontrolle der Übertragungsqualtität erleichtert wird.

## Patentansprüche

1. Verfahren zur Übertragung von Signalisierungs- und Steuerinformationen für Wellenlängenmultiplex-(WDM-)Netze (1) zur optischen, fasergebundenen Informationsübertragung in digitalisierter Form, wobei Nutzinformation mit einem Endgerät (2 bzw.8) optisch kodiert bzw. dekodiert und als optisches Signal definierter Grundwellenlänge an einem Netzzugangspunkt (3 bzw.7) in das optische Netz eingespeist bzw. diesem entnommen wird und mehrere Signale unterschiedlicher Wellenlängen gemeinsam in einer Glasfaser übertragen werden, und wobei die Signalisierungs- und Steuerinformation im Netzzugangspunkt (3 bzw.7) oder in einem weiteren Netzelement (4,5,6) erzeugt bzw. analysiert und in das Netz (1) eingespeist bzw. diesem entnommen wird,
**dadurch gekennzeichnet,**
**daß** unter Anwendung eines Zeitmultiplexverfahrens die Signalisierungs- und Steuerinformationen mit der gleichen Grundwellenlänge über die gleichen Netzkomponenten wie das entsprechende Nutzinformationssignal übertragen wird, wobei die Signalisierungs- und Steuerinformation unabhängig von der Nutzinformation modulierbar ist.

2. Verfahren nach Anspruch 1, **dadurch gekennzeichnet,**
**daß** die Signalisierungs- und Steuerinformation eine charakteristische Signalfolge enthält, durch welche sie im Signalstrom des Nutzsignals identifizierbar ist, wodurch die entsprechenden Sender und Emfänger der Signalisierungs- und Steuerinformation synchronisiert werden.

3. Verfahren nach Anspruch 1 oder 2, **dadurch gekennzeichnet,**
**daß** die Signalisierungs- und Steuerinformation in regelmäßigen zeitlichen Abständen T für eine Dauer von T_{OH} übertragen wird.

4. Verfahren nach Anspruch 3, **dadurch gekennzeichnet,**
**daß** T ein Vielfaches der charakteristischen Taktdauer der Nutzinformation ist.

5. Verfahren nach Anspruch 3 oder 4, **dadurch gekennzeichnet,**
**daß** die Synchronisation zwischen Sender und Empfänger der Signalisierungs-und Steuerinformation durch ein in kurzen Zeitabständen gesendetes charakteristisches Signal erfolgt, wobei das charakteristische Signal nach erfolgter Synchronisation stufenweise bis auf den Endwert T zunehmenden zeitlichen Abständen übertragen wird.

6. Verfahren nach einem der Ansprüche 3 bis 5, **dadurch gekennzeichnet,**
**daß** während der Übertragung der Signalisierungs- und Steuerinformation die Übertragung der Nutzinformation für eine Dauer von T_{OH} + 2δ unterbrochen ist, wobei zwischen der Ausblendung der Nutzinformation und der Übertragung der Signalisierungs- und Steuerinformation das Zeitintervall δ liegt.

7. Verfahren nach Anspruch 6, **dadurch gekennzeichnet,**
**daß** die Nutzinformation während der durch die Übertragung der Signalisierungs- und Steuerinformation bedingten Übertragungspause von T_{OH} + 2δ im sendenden Endgerät zwischengespeichert wird, z.B. unter Einsatz von Schieberegistern, und im dazwischenliegenden Intervall T - T_{OH} + 2δ mit einer derart erhöhten Bitrate übertragen wird, daß die durchschnittliche Bitrate dem Fall ununterbrochener Nutzinformationsübertragung entspricht.

8. Verfahren nach Anspruch 6 oder 7, **dadurch gekennzeichnet,**
**daß** das sendende Endgerät zeitliche Lücken der Breite T_{OB} + 2δ im Nutzsignal reserviert und deren zeitliche Lage über den Netzzugangspunkt dem die Signalisierungs- und Steuerinformation sendenden Netzelement signalisiert.

9. Verfahren nach Anspruch 6 oder 7, **dadurch gekennzeichnet,**
**daß** der Netzzugangspunkt dem sendenden Endgerät signalisiert, wann für das Senden der Signalisierungs- und Steuerinformation eine zeitliche Lücke der Breite T_{OH} + 2δ im Nutzsignal reserviert und das Nutzsignal gegebenenfalls zwischengespeichert werden soll.

10. Verfahren nach einem der Ansprüche 3 bis 5, **dadurch gekennzeichnet,**
**daß** die Signalisierungs- und Steuerinformation die Nutzinformation während des Übertragungsintervalls T_{OH} überschreibt.

11. Verfahren nach einem der vorangegangenen Ansprüche **dadurch gekennzeichnet,**
**daß** die durch die Übertragung der Signalisierungs- und Steuerinformation bedingte Störung des Nutzsignals mittels eines Fehlerkorrektur-Algorithmus korrigiert wird, der auf derartige Blockstörungen optimiert ist.

12. Verfahren nach einem der vorangegangenen Ansprüche, **dadurch gekennzeichnet,**
**daß** zur Übertragung der Nutzinformation ein Leitungscode verwendet wird, welcher fehlertolerant gegenüber Störungen ist, die durch die Übertragung der Signalisierungs- und Steuerinformation bedingt sind, insbesondere gegenüber Blockstörungen.

13. Verfahren nach einem der vorangegangenen Ansprüche, **dadurch gekennzeichnet,**
**daß** der Netzzugangspunkt die Signalisierungs- und Steuerinformation dem sendenden Endgerät übermittelt, welche sie optisch kodiert und über das Netz mit der kodierten Nutzinformation an das empfangende Endgerät überträgt, welches das Signal dekodiert, die Signalisierungs- und Steuerinformation aus dem Nutzsignal herausfiltert und sie an den vorgeschalteten empfangsseitigen Netzzugangspunkt übermittelt.

## Claims

1. Method for transmitting signaling and control information for wavelength-division-multiplexed (WDM) networks (1) for optical-fiber-based information transmission in digitized form, wherein payload information is optically encoded or decoded with a terminal device (2 or 8) and is fed into or extracted from the optical network as an optical signal with a defined base wavelength at a network access point (3 or 7), and multiple signals with different wavelengths are transmitted together in one glass fiber, and wherein the signaling and control information is generated or analyzed and fed into or extracted from the network (1) in the network access point (3 or 7) or in an additional network element (4, 5, 6),
**characterized in that**, using a time-division-multiplexing method, the signaling and control information is transmitted at the same base wavelength and through the same network components as the corresponding payload information signal, wherein the signaling and control information can be modulated independently of the payload information.

2. Method according to claim 1, **characterized in that** the signaling and control information contains a characteristic signal sequence by which it can be identified in the signal stream of the payload signal, by which means the appropriate transmitter and receiver of the signaling and control information are synchronized.

3. Method according to claim 1 or 2, **characterized in that** the signaling and control information is transmitted for a period of T_{OH} at regular time intervals T.

4. Method according to claim 3, **characterized in that** T is a multiple of the characteristic clock period of the payload information.

5. Method according to claim 3 or 4, **characterized in that** the synchronization between the transmitter and receiver of the signaling and control information takes place by means of a characteristic signal transmitted at short time intervals, wherein the characteristic signal is transmitted at time intervals increasing to the final value T in a stepwise manner once synchronization has taken place.

6. Method according to any one of claims 3 through 5, **characterized in that** the transmission of payload information is interrupted for a period of T_{OH} + 2δ during the transmission of the signaling and control information, wherein the time interval δ occurs between the blanking of the payload information and the transmission of the signaling and control information.

7. Method according to claim 6, **characterized in that** the payload information is buffered during the pause in transmission of T_{OH} + 2δ in the transmitting terminal device caused by the transmission of the signaling and control information, for example through the use of shift registers, and **in that** during the intervening interval T - T_{OH} + 2δ, transmission takes place at a bit rate that is increased such that the average bit rate corresponds to the case of uninterrupted payload information transmission.

8. Method according to claim 6 or 7, **characterized in that** the transmitting terminal device reserves time gaps with a width of T_{OH} + 2δ in the payload signal and signals their position in time through the network access point to the network element that transmits the signaling and control information.

9. Method according to claim 6 or 7, **characterized in that** the network access point signals the transmitting terminal device when a time gap with a width of T_{OH} + 2δ is reserved in the payload signal for the transmission of the signaling and control information and it may be necessary to buffer the payload signal.

10. Method according to any one of claims 3 through 5, **characterized in that** the signaling and control information overwrites the payload information during the transmission interval T_{OH}.

11. Method according to any one of the preceding claims, **characterized in that** the disruption of the payload signal caused by the transmission of the signaling and control information is corrected by means of an error-correction algorithm optimized for such block disruptions.

12. Method according to any one of the preceding claims, **characterized in that** a line code that is error-tolerant with respect to disruptions caused by the transmission of the signaling and control information, in particular to block disruptions, is used for transmission of the payload information.

13. Method according to any one of the preceding claims, **characterized in that** the network access point transmits the signaling and control information to the transmitting terminal device, which optically encodes it and transmits it through the network with the coded payload information to the receiving terminal device, which decodes the signal, filters the signaling and control information out of the payload signal, and transmits said signaling and control information to the upstream receive-side network access point.

## Revendications

1. Procédé de transmission d'informations de signalisation et de commande pour réseaux à multiplexage en longueur d'onde (WDM) (1) destinés à la transmission d'informations optique par fibres sous forme numérisée, l'information utile étant codée ou décodée optiquement à l'aide d'un terminal (2 ou 8) et injectée dans le réseau optique ou prélevée de celui-ci au niveau d'un point d'accès au réseau (3 ou 7) sous la forme d'un signal optique de longueur d'onde fondamentale définie, et plusieurs signaux de longueurs d'onde différentes étant transmis ensemble dans une fibre optique, et l'information de signalisation et de commande étant générée ou analysée dans le point d'accès au réseau (3 ou 7) ou dans un autre élément de réseau (4, 5, 6) et injectée dans le réseau (1) ou prélevée de celui-ci,
**caractérisé en ce que**,
grâce à l'application d'un procédé de multiplexage temporel, l'information de signalisation et de commande est transmise avec la même longueur d'onde fondamentale et par l'intermédiaire des mêmes composants de réseau que le signal d'information utile correspondant, l'information de signalisation et de commande étant modulable indépendamment de l'information utile.

2. Procédé selon la revendication 1, **caractérisé en ce que**
l'information de signalisation et de commande contient une séquence de signal caractéristique permettant de l'identifier dans le flux de signal du signal utile, ce qui entraîne la synchronisation des émetteur et récepteur correspondants de l'information de signalisation et de commande.

3. Procédé selon l'une quelconque des revendications 1 ou 2, **caractérisé en ce que** l'information de signalisation et de commande est transmise à des intervalles de temps T réguliers pour une durée de T_{OH}.

4. Procédé selon la revendication 3, **caractérisé en ce que** T est un multiple de la période caractéristique de l'information utile.

5. Procédé selon l'une quelconque des revendications 3 ou 4, **caractérisé en ce que** la synchronisation entre l'émetteur et le récepteur de l'information de signalisation et de commande est réalisée par un signal caractéristique émis à de brefs intervalles de temps, le signal caractéristique étant transmis, une fois la synchronisation terminée, à des intervalles de temps qui augmentent progressivement jusqu'à prendre la valeur finale T.

6. Procédé selon l'une quelconque des revendications 3 à 5, **caractérisé en ce que**, pendant la transmission de l'information de signalisation et de commande, la transmission de l'information utile est suspendue pour une durée de T_{OH} + 2 δ, la suspension de l'information utile et la transmission de l'information de signalisation et de commande étant séparées par l'intervalle de temps δ.

7. Procédé selon la revendication 6, **caractérisé en ce que** l'information utile est temporairement enregistrée dans le terminal émetteur, par exemple moyennant des registres à décalage, au cours de la suspension de transmission de T_{OH} + 2 δ en raison de la transmission de l'information de signalisation et de commande, et transmise, au cours de l'intervalle T - T_{OH} +2 δ séparant les deux transmissions, avec un débit binaire augmenté de manière telle que le débit binaire moyen corresponde au cas de transmission d'information utile ininterrompue.

8. Procédé selon l'une quelconque des revendications 6 ou 7, **caractérisé en ce que** le terminal émetteur réserve des créneaux temporels de largeur T_{OH} + 2 δ dans le signal utile et signale leur position temporelle, par l'intermédiaire du point d'accès au réseau, à l'élément réseau émettant l'information de signalisation et de commande.

9. Procédé selon l'une quelconque des revendications 6 ou 7, **caractérisé en ce que** le point d'accès au réseau signale au terminal émetteur à quel moment un créneau temporel de largeur T_{OH} + 2 δ doit être réservé dans le signal utile pour l'émission de l'information de signalisation et de commande et à quel moment le signal utile doit, le cas échéant, être temporairement enregistré.

10. Procédé selon l'une quelconque des revendications 3 à 5, **caractérisé en ce que** l'information de signalisation et de commande écrase l'information utile au cours de l'intervalle de transmission T_{OH}.

11. Procédé selon l'une quelconque des revendications précédentes, **caractérisé en ce que** l'artéfact du signal utile dû à la transmission de l'information de signalisation et de commande est corrigé moyennant un algorithme de correction d'erreur qui est optimisé pour de tels artéfacts de bloc.

12. Procédé selon l'une quelconque des revendications précédentes, **caractérisé en ce qu'**on utilise un code de ligne pour la transmission de l'information utile qui est insensible aux artéfacts dus à la transmission de l'information de signalisation et de commande, notamment aux artéfacts de bloc.

13. Procédé selon l'une quelconque des revendications précédentes, **caractérisé en ce que** le point d'accès au réseau transmet l'information de signalisation et de commande au terminal émetteur qui procède à son codage optique et qui la transmet, par l'intermédiaire du réseau, avec l'information utile codée, au terminal récepteur qui décode le signal, récupère l'information de signalisation et de commande par filtrage du signal utile, et la transmet au point d'accès au réseau côté réception prévu en amont.
